Europäisches Patentamt

European Patent Office

Office européen des brevets

(11) Publication number: **0 240 697 B1**

# EUROPEAN PATENT SPECIFICATION

(45) Date of publication of patent specification: **26.05.93**  (51) Int. Cl.5: **C08L 15/00**, C08J 3/07, C08C 19/02

(21) Application number: **87102797.5**

(22) Date of filing: **27.02.87**

The file contains technical information submitted after the application was filed and not included in this specification

(54) **Nitrile group–containing highly saturated polymer rubber latex and process for production thereof.**

(30) Priority: **28.02.86 JP 43718/86**

(43) Date of publication of application:
**14.10.87 Bulletin 87/42**

(45) Publication of the grant of the patent:
**26.05.93 Bulletin 93/21**

(84) Designated Contracting States:
**DE FR GB IT**

(56) References cited:
**EP– A– 0 111 412
DE– A– 3 418 357
GB– A– 870 478
GB– A– 983 297
US– A– 4 452 950**

(73) Proprietor: **NIPPON ZEON CO., LTD.**
**6– 1, 2– chome, Marunouchi, Chiyoda– ku Tokyo(JP)**

(72) Inventor: **Oyama, Motofumi**
**5– 27– 6, Hailand**
**Yokosuka– shi Kanagawa– ken(JP)**
Inventor: **Mori, Osamu**
**873, Futoo– cho Kohoku– ku**
**Yokohama– shi Kanagawa– ken(JP)**
Inventor: **Sugi, Nagatoshi**
**5– 9– 1– 302, Isogo Isogo– ku**
**Yokohama– shi Kanagawa– ken(JP)**

(74) Representative: **Hansen, Bernd, Dr.rer.nat. et al**
**Hoffmann, Eitle & Partner Patentanwälte Arabellastrasse 4 Postfach 81 04 20**
**W– 8000 München 81 (DE)**

## Description

The present invention relates to a process for producing a nitrite group containing highly saturated polymer rubber latex which has improved film strength both in the uncured and cured states.

An acrylonitrile – butadiene copolymer rubber (NBR) latex having excellent oil resistance, chemical resistance and adhesion to polar materials such as fibers or leathers has been widely used heretofore as a polymer rubber latex containing a nitrile group. The NBR latex, however, has lower film strength in the uncured and cured states than a natural rubber latex. In an attempt to overcome this defect, an NBR – type latex obtained by copolymerizing an ethylenically unsaturated carboxylic acid or isoprene as a third component was developed. The properties of this latex, however, are not sufficient, and are still desired to be improved.

EP – A – 0111412 discloses a process for hydrogenating a copolymer of a conjugated diene and one or more copolymerizable monomers. The hydrogentation is carried out in the presence of an inert solvent, after which the reaction mixture may be contacted with hot water and/or steam in order to precipitate out the copolymer. During the evolution of the solvent from the reaction mixture, the hydrogenated copolymer is precipitated and floats as crumbs on the surface of the hot water. Accordingly, the hot water and the copolymer phases are clearly separated.

US – A – 4452950 discloses a process for hydrogenating an unsaturated polymer in a latex form by treating it with an oxidising agent, a reducing agent, and a metal ion activator.

GB – A – 870478 discloses the preparation of a rubber latex by emulsifying a polymer solution prepared by dissolving a polymer, such as butyl rubber, into a $C_5 - C_{12}$ aliphatic hydrocarbon solvent at a temperature of 65 – 100C°. The emulsification step makes use of an emulsifier such as an organic sulfate. If this process is carried out at room temperature, then a good deal of coagulation takes place during the emulsification.

It is an object of this invention therefore to provide a nitrite group – containing polymer rubber latex having improved film strength both in the uncured and cured states.

According to this invention, there is provided a process for producing a nitrite group – containing highly saturated polymer rubber latex, which comprises converting a solution of a nitrite group – containing highly saturated polymer rubber having an iodine value of not more than 120 in an inert solvent, said inert solvent being at least one kind of aromatic solvent, halogenated hydrocarbon solvent or ketone or a mixture of such a solvent with an aliphatic or alicyclic hydrocarbon, into an oil – in – water emulsion using water and an anionic emulsifier at room temperature, and removing the solvent from the resulting emulsion.

Since the nitrile group – containing highly saturated polymer rubber used in this invention requires oil resistance, the content of its nitrile group – containing monomer units may be properly selected usually within the range of 5 to 60% by weight according to the use (solvents or oils to be contacted) of the final polymer.

To obtain satisfactory dry film strength both in the uncured and cured states, the nitrile group – containing saturated polymer rubber in the present invention has an iodine value of not more than 120. If its iodine value exceeds 120, its dry film strength both in the uncured and cured states is reduced. The preferred iodine value is 0 to 100, especially 0 to 85.

Examples of the nitrile group – containing highly saturated polymer rubber are polymer rubbers obtained by hydrogenating the conjugated diene units of unsaturated nitrile/conjugated diene copolymer rubbers, and polymer rubbers obtained by hydrogenating the conjugated diene monomer units of unsatu – rated nitrile/conjugated diene/ethylenically unsaturated monomer terpolymer rubbers. These nitrile group – containing highly saturated polymer rubbers can be obtained by using ordinary polymerization techniques and ordinary hydrogenating methods. Needless to say, however, the method of producing these rubbers is not particularly restricted in the present invention.

Examples of the unsaturated nitrile are acrylonitrile and methacrylonitrile Examples of the conjugated dienes are 1,3 – butadiene, 2,3 – dimethylbutadiene, isoprene and 1,3 – pentadiene. Examples of the ethylenically unsaturated monomer include unsaturated carboxylic acids such as acrylic acid, methacrylic acid, itaconic acid and maleic acid, and salts thereof such as alkali metal or ammonium salts thereof; esters of the above carboxylic acids such as methyl acrylate, ethyl acrylate, butyl acrylate and 2 – ethylhexyl acrylate; alkoxyalkyl esters of the above unsaturated carboxylic acids such as methoxymethyl acrylate, ethoxyethyl acrylate and methoxyethoxyethyl acrylate; acrylamide and methacrylamide; N – substituted (meth)acrylamides such as N – methylol (meth)acrylamide, N,N' – dimethylol (meth) – acrylamide and N – ethoxymethyl (meth)acrylamide; and cyanoalkyl esters of (meth)acrylic acid such as cyanomethyl (meth)acrylate, 2 – cyanoethyl (meth)acrylate, 3 – cyanopropyl (meth)acrylate and 4 – cyanobutyl (meth)acrylate.

Specific examples of the nitrile group – containing highly saturated polymer rubbers used in this invention are a hydrogenation product of butadiene/acrylonitrile copolymer rubber, a hydrogenation product of isoprene/butadiene/acrylonitrile copolymer rubber, a hydrogenation product of isoprene/acrylonitrile copolymer rubber, a hydrogenation product of butadiene/methyl acrylate/acrylonitrile copolymer rubber, and a hydrogenation product of butadiene/acrylic acid/acrylonitrile copolymer rubber.

The iodine value of the polymers used in this invention is determined in accordance with JIS K0070.

The nitrile group – containing highly saturated polymer rubber latex prepared by the process of this invention is a dispersion of the above rubber in water.

The solution of the nitrile group – containing highly saturated polymer rubber may be the polymer solution as obtained at the end of polymerisation and hydrogenation either as such or after dilution, or a solution of the rubber as a solid in a solvent.

Solvents capable of dissolving the above rubbers may be used as the solvent either singly or in combination. Examples include aromatic solvents such as benzene, toluene and xylene, halogenated hydrocarbon solvents such as dichloroethane and chloroform, and ketones such as methyl ethyl ketone, acetone or tetrahydrofuran. It is also possible to use a mixture of such a solvent with a solvent incapable of dissolving these rubbers, for example an aliphatic or alicyclic hydrocarbon such as butane, pentane, n – hexane and cyclohexane. The concentration of the rubber in the solution is usually 1 to 30% by weight, preferably 5 to 15% by weight.

Examples of emulsifiers that can be used include anionic emulsifiers such as higher fatty acid salts, rosin acid salts, dialkylsulfosuccinic acid salts, alkyl – or aryl – sulfonic acid salts, alkyl – or aryl – sulfuric acid salts and aliphatic alcohol phosphoric ester salts. Specific examples of the higher fatty acid salts are sodium and potassium salts of fatty acids having 8 to 18 carbon atoms such as oleic acid, stearic acid, palmitic acid and lauric acid. Specific examples of the rosin acid salts are sodium and potassium salts of natural rosin acids, and disproportionated or hydrogenated rosin acids prepared therefrom. Specific examples of the dialkylsulfosuccinic acids are sodium and potassium salts of dialkylsuccinic acids having 4 to 12 carbon atoms in the alkyl moiety such as dibutylsulfosuccinic acid and dioctylsulfosuccinic acid. Specific examples of the alkylsulfonic acid salts are sodium and potassium salts of sulfonic acids having linear alkyl groups, which are biodegradable. Specific examples of the arylsulfonic acid salts are sodium and potassium salts of $(C_{8-18} – alkyl)$benzenesulfonic acids such as dodecylbenzenesulfonic acid and octylbenzenesulfonic acid. Specific examples of the sulfuric acid esters are sodium octylsulfate and sodium lauryl sulfate. Specific examples of the phosphoric ester salts are a sodium salt of octyl alcohol phosphoric ester and a sodium salt of lauryl alcohol phosphoric ester.

These anionic emulsifiers may be used in combination with nonionic emulsifiers such as polyox – yethylene alkyl phenol ethers and polyoxyethylene alkyl esters.

To obtain a stable latex, the amount of the emulsifier is desirably 1 to 20 parts by weight, preferably 2 to 10 parts by weight, per 100 parts by weight of the rubber.

Emulsification is generally carried out by mixing the rubber solution with water containing the emulsifier. Since the resulting emulsion and latex are stable in alkalinity with a pH of 8 to 13, a pH adjusting agent such as sodium hydroxide or potassium hydroxide may be added to water in advance.

The volume ratio of the rubber solution to water at the time of emulsification is suitably from 3:1 to 1:20. Emulsification is carried out by using ordinary mixing means such as a homomixer, a colloid mill, a homogenizer, a Disper mill, a line mixer or an ultrasonic emulsification device. The size of the dispersed rubber particles in the resulting latex (the particle diameter of the latex) is determined depending upon the emulsification conditions such as the amount of the emulsifier, the amount of water, and the intensity of stirring. An optimum latex particle diameter may be selected according to the purpose for which the latex is used. Usually, it is 0.05 to 5 $\mu$m.

The solvent is removed from the emulsion by a known method such as steam distillation and distillation under reduced pressure. As required, the latex resulting from solvent removal may be concentrated by centrifugation, creaming, evaporation under heat, etc.

The latex of this invention is adjusted to a total solids content of 1 to 70% by weight, and used in various applications.

The nitrile group – containing highly saturated polymer in the latex of this invention contains little or no gelled portion (a portion insoluble in the solvent). In spite of this, an uncured film obtained by casting the latex of this invention has much improved strength over an uncured film of a conventional NBR latex containing a considerable amount of a gelled portion. A cured film from the latex of this invention also has very high strength and excellent oil resistance and thermal resistance. Accordingly, the latex of this invention is useful as a textile treating agent such as a binder for nonwoven fabrics, a paper treating agent as in the production of impregnated paper, a raw material for articles to be used in oil, a raw material for

3

foam rubbers, a raw material for a thread – shaped rubber and as a binder for cork.

The following Examples illustrate the present invention specifically. It should be understood however that the invention is not limited to these examples.

EXAMPLE 1

Preparation of nitrile group – containing highly saturated polymer rubbers: –

The acrylonitrile/butadiene copolymer rubbers (NBR) and butadiene/butyl acrylate/acrylonitrile ter – polymers obtained by emulsion polymerization, as indicated in Table 1, were each dissolved in methyl isobutyl ketone, and hydrogenated using a Pd – carbon catalyst to obtain hydrogenated NBRs and hydrogenated acrylonitrile/butadiene/butyl acrylate terpolymer rubbers having the iodine values indicated in Table 1.

Table 1

| Monomer composition | | Rubber disignation | Acrylonitrile-butadiene copolymer rubber | | | | | Acrylonitrile butadiene-butyl acrylate co-polymer rubber | | |
|---|---|---|---|---|---|---|---|---|---|---|
| | | | A | B | C | D | E | F | G | H |
| | Bonded acrylonitrile (% by weight) | | 37 | 37 | 45 | 37 | 33 | 35 | 35 | 35 |
| | Butyl acrylate units (wt.%) | | – | – | – | – | – | 25 | 35 | 35 |
| | Butadiene units (wt.%) | | 63 | 63 | 55 | 63 | 67 | 40 | 30 | 30 |
| Before hydro-genation | Iodine value | | 290 | 290 | 255 | 290 | 308 | 185 | 138 | 138 |
| After hydro-genation | Iodine value (% by weight) | | 103 | 51 | 25 | 159 | – | 20 | – | 23 |

4

Preparation of latices: —

Each of the hydrogenated rubber samples shown in Table 1 was dissolved in a toluene/dichloroethane (75/25 by volume %) mixed solvent. The resulting rubber solution was poured into an aqueous emulsifier solution composed of 1.2 g of potassium oleate, 1.2 g of a potassium salt of rosin acid, 0.045 g of potassium hydroxide and 300 g of water with stirring. The mixture was stirred at room temperature by a TK — homomixer (model M, made by Tokushu Kika Kogyo Co., Ltd.) at 10,000 rpm for 10 minutes. The resulting emulsion was subjected to steam stripping to remove the solvent, and then concentrated by an evaporator to form a latex having a solids content of about 30%. The latex was centrifuged at room temperature and 3,000 rpm for 15 minutes to remove the excess of the emulsifier and concentrate it.

The solids contents and pH values of latices obtained as above are shown in Table 3. A toluene — insoluble portion (after immersion in toluene at room temperature for 48 hours) was not found to exist in these latices.

Uncured films and cured films were prepared from these latices, and subjected to a tensile test in accordance with JIS K6301. The results are also shown in Table 3.

Preparation of uncured films: —

Each of the latices was cast on a glass plate, and dried at a temperature of 20°C and a humidity of 65% for 3 days. A JIS #3 dumbbell specimen was prepared from the resulting film.

Preparation of cured films: —

Each of the latices was compounded in accordance with recipe I or II shown in Table 2 below. The compounded stock was cast onto a glass plate, dried at a temperature of 20°C and a humidity of 65% for 3 days, and then cured at 100°C for 30 minutes. A JIS #3 dumbbell specimen was prepared from the resulting cured film.

Table 2

| Compounding recipe (the figures show parts by weight) | | |
|---|---|---|
| | I | II |
| Latex (see Table 3) | 100 (solids) | 100 (solids) |
| Colloidal sulfur | 1 | — |
| Zinc oxide | 2 | — |
| Zinc diethyldiethiocarbamate | 1 | — |
| Zinc salt of 2 — mercaptobenzothiazole | 1 | — |
| t — Butyl hydroperoxide | — | 0.5 |
| Tetraethylenepentamine | — | 0.5 |

5

## Table 3

| Rubber No. | | Invention | | | | | Comparison | | |
|---|---|---|---|---|---|---|---|---|---|
| | | A* | B* | C* | F* | H* | D* | E | G |
| Latex | Solids content (wt.%) | 45.3 | 45.5 | 45.0 | 45.0 | 45.6 | 45.0 | 45.4 | 45.4 |
| | pH | 9.3 | 9.5 | 9.2 | 9.2 | 9.3 | 9.0 | 9.3 | 9.3 |
| | Average particle diameter (**) | 0.61 | 0.54 | 0.32 | 0.58 | 0.49 | 0.43 | 0.72 | 0.51 |
| Recipe | | I | I | II | II | I | I | II | I |
| Uncured film | 500% Tensile stress (kg/cm²) | 6 | 7 | 8 | 6 | 7 | 6 | 5 | 7 |
| | Tensile strength (kg/cm²) | 18 | 20 | 48 | 30 | 22 | 14 | 13 | 9 |
| Cured film | 300% Tensile stress (kg/cm²) | 17 | 19 | 29 | 25 | 19 | 13 | 12 | 13 |
| | Tensile strength (kg/cm²) | 120 | 215 | 288 | 165 | 156 | 56 | 58 | 52 |

(*): Hydrogenated rubbers

(**): Determined from electron microscopic observation

The results given in Table 3 demonstrate that the uncured films and cured films obtained by using the latices of this invention have much improved tensile strength over the uncured films and cured films obtained by using latices outside the scope of the invention.

A commercially available NBR latex (a copolymer of acrylonitrile and butadiene produced by emulsion polymerization having a medium high bonded acrylonitrile content, a toluene – insolule content of 53% by weight, an average particle diameter of 0.05 μm and a solids content of 41% by weight which was produced by Nippon Zeon Co., Ltd. and is available under the tradename NIPOL Lx – 1562) was subjected to the same test as above. As a result, the uncured film had a tensile strength of 6.3 kg/cm$^2$, and the cured film (recipe I) had a tensile strength of 103 kg/cm$^2$.

EXAMPLE 2

Hydrogenated NBRs having an iodine value of 78 and 30 were prepared by hydrogenating an acrylonitrile/butadiene copolymer rubber (NBR) having a bonded acrylonitrile content of 37% by weight in the same way as in Example 1. One hundred grams of one of these hydrogenated NBRs was dissolved in a mixed solvent composed of 450 g of cyclohexane and 450 g of methyl ethyl ketone. The solution was poured into an aqueous emulsifier solution composed of 5 g of sodium linear alkylbenzenesulfonate (LAS), 0.5 g of potassium hydroxide and 1,000 g of water, and the mixture was stirred strongly by a TK homomixer at room temperature and 10,000 rpm for 10 minutes. The emulsion was then worked up as in Example 1 to concentrate it and remove the excess of the emulsifier and thus form a latex. A latex was also prepared in the same way from the other hydrogenated NBR.

The properties of these latices and uncured and cured films (recipe I) obtained from them are shown in Table 4.

Table 4

| | | Invention | |
|---|---|---|---|
| Latex | Rubber designation (iodine value) | I*(78) | J*(30) |
| | Solids content (wt.%) | 45.2 | 45.1 |
| | pH | 9.8 | 9.6 |
| | Average particle diameter ($\mu$m) | 0.54 | 0.63 |
| Uncured film | 500% Tensile stress (kg/cm$^2$) | 7 | 8 |
| | Tensile strength (kg/cm$^2$) | 20 | 36 |
| Cured film | 300% Tensile stress (kg/cm$^2$) | 18 | 22 |
| | Tensile strength (kg/cm$^2$) | 173 | 235 |

(*): Hydrogenated rubbers

## Claims

1. A process for producing a nitrile group – containing highly saturated polymer rubber latex, which comprises converting a solution of a nitrile group – containing highly saturated polymer rubber having an iodine value of not more than 120 in an inert solvent, said inert solvent being at least one kind of aromatic solvent, halogenated hydrocarbon solvent or ketone or a mixture of such a solvent with an aliphatic or alicyclic hydrocarbon, into an oil – in – water emulsion using water and an anionic emulsifier at room temperature, and removing the solvent from the resulting emulsion.

2. The process of claim 1 wherein the nitrile group – containing highly saturated polymer rubber is obtained by hydrogenating the conjugated diene units of an unsaturated nitrile/conjugated diene copolymer rubber, or the conjugated dieme units of an unsaturated nitrile/conjugated diene/ethylenically unsaturated monomer terpolymer rubber.

3. The process of claim 1 or 2 wherein the rubber has an unsaturated nitrile content of 5 to 60% by weight.

4. The process of any one of claims 1 to 3 wherein the inert solvent is a solvent capable of dissolving the rubber, and the emulsifier is an anionic emulsifier.

**Patentansprüche**

1. Verfahren zur Herstellung eines Nitrilgruppen enthaltenden hochgesättigten Polymerkautschuklatex, welches die Umwandlung einer Lösung eines Nitrilgruppen enthaltenden hochgesättigten Polymer‑kautschuks mit einer Jodzahl von nicht mehr als 120 in einem inerten Lösungsmittel, wobei dieses inerte Lösungsmittel mindestens ein Typ eines aromatischen Lösungsmittels, halogenierten Kohlen‑wasserstofflösungsmittels oder Ketons oder eine Mischung solch eines Lösungsmittels mit einem aliphatischen oder alizyklischen Kohlenwasserstoff ist, in eine Öl‑in‑Wasser‑Emulsion unter Ver‑wendung von Wasser und einem anionischen Emulgator bei Raumtemperatur und Entfernung des Lösungsmittels von der resultierenden Emulsion umfaßt.

2. Verfahren nach Anspruch 1, worin der Nitrilgruppen enthaltende hochgesättigte Polymerkautschuk durch Hydrierung der konjugierten Dieneinheiten eines ungesättigten Nitril/konjugiertes Dien‑Copoly‑merkautschuks oder der ungesättigten Dieneinheiten eines ungesättigten Nitril/konjugiertes Dien/ethylenisch ungesättigtes Monomer‑Terpolymerkautschuks erhalten wird.

3. Verfahren nach Anspruch 1 oder 2, worin der Kautschuk einen Gehalt an ungesättigtem Nitril von 5 bis 60 Gew.‑% hat.

4. Verfahren nach einem der Ansprüche 1 bis 3, worin das inerte Lösungsmittel ein Lösungsmittel ist, das in der Lage ist, den Kautschuk aufzulösen, und der Emulgator ein anionischer Emulgator ist.

**Revendications**

1. Procédé de production d'un latex de caoutchouc de polymère à degré de saturation élevé contenant un groupe nitrile, qui comprend la transformation d'une solution d'un caoutchouc de polymère à degré de saturation élevé contenant un groupe nitrile présentant un indice d'iode ne dépassant pas 120 dans un solvant inerte, ce solvant inerte étant constitué par au moins une sorte de solvant aromatique, un solvant hydrocarbure halogéné ou une cétone ou un mélange d'un solvant de ce type avec un hydrocarbure aliphatique ou alicyclique, en une émulsion huile dans l'eau en utilisant de l'eau et un agent émulsifiant anionique à température ambiante et en éliminant le solvant de l'émulsion résultante.

2. Procédé selon la revendication 1, dans lequel on obtient le caoutchouc de polymère à degré de saturation élevé contenant un groupe nitrile par hydrogénation des motifs diène conjugué d'un caoutchouc de copolymère nitrile insaturé/diène conjugué ou des motifs diène conjugué d'un caout‑chouc de terpolymère nitrile insaturé/diène conjugué/monomère éthyléniquement insaturé.

3. Procédé selon la revendication 1 ou 2, dans lequel le caoutchouc présente une teneur en nitrile insaturé comprise entre 5 et 60% en poids.

4. Procédé selon l'une quelconque des revendications 1 à 3, dans lequel le solvant inerte est un solvant capable de dissoudre le caoutchouc, et l'agent émulsifiant est un agent émulsifiant anionique.